# EUROPÄISCHE PATENTSCHRIFT

(11) **EP 2 982 541 B1**
(45) Veröffentlichungstag und Bekanntmachung des Hinweises auf die Patenterteilung: **12.10.2022**
(21) Anmeldenummer: 15176087.3
(22) Anmeldetag: 09.07.2015
(51) Int. Cl.: B60K 37/06, B60Q 3/217, B60Q 3/78, B60Q 3/80, B60Q 3/82

(54) **ANORDNUNG ZUR ERZEUGUNG VON AMBIENTLICHT FÜR EIN FAHRZEUG UND VERFAHREN ZUM EINSTELLEN EINES AMBIENTELICHTES MITTELS DER ANORDNUNG**
ARRANGEMENT FOR CREATING AMBIENT LIGHTING FOR A VEHICLE AND METHOD FOR ADJUSTING AMBIENT LIGHTING USING THE ARRANGEMENT
DISPOSITIF POUR CRÉER UN ÉCLAIRAGE AMBIANT POUR UN VÉHICULE ET PROCÉDÉ POUR RÉGLER L'ÉCLAIRAGE AMBIANT À L'AIDE DU DISPOSITIF

(30) Priorität: 04.08.2014 DE 102014215329
(43) Veröffentlichungstag der Anmeldung: 10.02.2016
(73) Patentinhaber: Volkswagen Aktiengesellschaft, 38440 Wolfsburg (DE)
(72) Erfinder: Wild, Holger, 10179 Berlin (DE)

(56) Entgegenhaltungen:
- EP-A1- 1 550 579
- WO-A1-2010/093085
- WO-A1-2013/172526
- DE-A1-102010 043 295
- DE-A1-102012 023 769
- DE-A1-102012 214 108
- DE-U1-202005 014 791
- FR-A1- 2 922 832
- JP-A- 2011 189 821
- US-A1- 2002 152 045
- US-A1- 2007 211 483

## Beschreibung

### Stand der Technik

Die vorliegende Erfindung betrifft eine Anordnung zur Erzeugung von Ambientelicht für ein Fahrzeug sowie ein Verfahren zum Einstellen eines Ambientelichtes mittels einer solchen Anordnung. Insbesondere betrifft die vorliegende Erfindung eine einfache und intuitive Art und Weise, eine Einstellung an einer Ambientelichteinheit vorzunehmen.

Zur Individualisierung des Fahrzeuginnenraums sind sogenannte Ambientelichtpakete bekannt, welche unterschiedliche Applikationen und Bereiche im Fahrzeuginnenraum mit farblichen Lichtakzenten betonen können. Auf diese Weise kann der Anwender den Innenraum entsprechend seinen Vorstellungen illuminieren. In allen zurzeit bekannten Fahrzeugen muss die Einstellung des Ambientelichtes (z. B. Helligkeit und Farbton) über ein Untermenü eingestellt werden, was einer indirekten Bedienung entspricht. Alternativ sind ausschließlich zur Bedienung des Ambientelichtes vorgesehene Taster/Schalter/Dimmer bekannt, über welche das Ambientelicht ein- beziehungsweise ausgeschaltet und hinsichtlich seiner Farbe verändert werden kann.

DE 2012 010 044 A1 offenbart eine Vorrichtung zur Steuerung einer Beleuchtung in einem Fahrzeuginnenraum, welche eine grafische Benutzeroberfläche verwendet, auf welcher der Innenraum des Fahrzeuges schematisch abgebildet ist. Durch diese Anzeige besteht die Möglichkeit, jeder im Fahrzeuginnenraum befindlichen Beleuchtungsquelle eine eigene Einstellung zuzuweisen.

DE 10 2010 043 295 A1 offenbart ein Lichtemittermodul für den automobilen Einsatz. Gemäß einem ersten Ausführungsbeispiel wird vorgeschlagen, das Lichtemittermodul für Ambientebeleuchtung einzusetzen. Gemäß einem zweiten Ausführungsbeispiel wird vorgeschlagen, das Modul in einem Schalter einzusetzen, der im Ansprechen auf die Berührung mit einem Finger hinsichtlich einer Eigenschaft des von ihm ausgeschütteten Lichtes verändert wird.

DE 10 2012 214 108 A1 offenbart eine Beleuchtungseinheit zur Anordnung in einem Dachhimmel eines Fortbewegungsmittels. Organische Leuchtelemente sind hierzu hinter einem Elektrolumineszenz-Touchabschnitt angeordnet. Der Touachabschnitt kann verwendet werden, um einen Bereich zu aktivierender Leuchtelemente zu definieren. Durch eine Wischgeste kann der aktivierte Bereich verschoben werden.

DE 10 2012 023 769 A1 offenbart eine Innenraumleuchte für ein Kraftfahrzeug, welche einen berührungsempfindlichen Sensor aufweist, welcher beispielsweise als kapazitiver Schalter ausgebildet ist. Mittels derselben kann das Leuchtmittel dazu verwendet werden, Licht in unterschiedlichen Farben auszustrahlen.

WO 2010/093085 A1 offenbart ein Ambientelicht mit einem berührungsempfindlichen Sensor, mittels dessen Einfluss auf die Erscheinung eines von der Ambienteleuchte ausgeschütteten Lichts genommen werden kann.

JP 2011 189821 A offenbart eine Fahrzeuginnenraumbeleuchtung, welche über eine Vielzahl von berührungsempfindlichen Elementen entsprechend einer Anwenderbedienung ein- oder ausgeschaltet wird.

WO 2013/172526 A1 offenbart ein Dachmodul für einen Dachhimmel eines Fortbewegungsmittels mit einer Lampe. Ein berührungsempfindliches Element ist eingerichtet, das Licht zu dimmen oder seine Farbe anzupassen, wenn der Anwender die berührungsempfindliche Oberfläche an einer vordefinierten Stelle berührt.

FR 2 922 832 offenbart eine Ambientelichtleiste mit einer berührungssensitiven Oberfläche. In Abhängigkeit einer Position eines auf die Oberfläche aufgelegten Fingers wird ein Parameter des Ambientelichtes angepasst.

DE 20 2005 014791 U1 offenbart eine Innenraum-Beleuchtungsvorrichtung für ein Fahrzeug, insbesondere für einen Dachhimmel eines Kraftfahrzeuges, mit zumindest einem flächigen, als Lichtquelle ausgebildeten OLED-Bildschirm, der dazu ausgelegt ist, Licht in den Innenraum auszustrahlen.

Es ist eine Aufgabe der vorliegenden Erfindung den Stand der Technik durch eine Erhöhung des Bedienkomforts einer Ambientelichteinheit weiterzubilden.

### Offenbarung der Erfindung

Die vorstehend identifizierte Aufgabe wird erfindungsgemäß durch die Gegenstände der unabhängigen Ansprüche gelöst. Die Unteransprüche zeigen bevorzugte Weiterbildungen der Erfindung. Die Anordnung mit der Ambientelichteinheit dient einer individuellen Beleuchtung eines Innenraums eines Fahrzeugs. Das Fahrzeug kann beispielsweise ein PKW, ein Transporter, ein LKW, ein Wasserfahrzeug und/oder ein Luftfahrzeug sein. Die Ambientelichteinheit kann Lichtakzente (z. B. unterschiedlicher Helligkeit und Farbe sowie die automatische Änderung dieser Eigenschaften über der Zeit) im Innenraum des Fahrzeugs setzen. Hierzu umfasst die Ambientelichteinheit ein Leuchtmittel zur Erzeugung des Ambientelichtes und ein berührungsempfindliches Eingabeelement zur Modifikation der Lichtstärke und/oder eines Farbtons des Ambientelichtes. Das berührungsempfindliche Eingabeelement ist insbesondere nicht als Druckknopf beziehungsweise als herkömmlicher Taster ausgestaltet und ist insbesondere nicht mit einem Bildschirm hinterlegt. Erfindungsgemäß wird das berührungsempfindliche Eingabeelement vielmehr in unmittelbarer Nähe zum Leuchtmittel angeordnet. Auf diese Weise ist eine intuitive Zuordnung zwischen dem Eingabeelement und der Auswirkung auf den Betriebszustand des Leuchtmittels gegeben. Umständliche Einstellungen in hierarchischen Menüstrukturen können somit vermieden werden. Zudem bietet sich der Vorteil, dass zentrale Eingabeelemente für z. B. einen Bordcomputer zeitgleich für die Bedienung anderer Funktionen verwendet werden können. Auf diese Weise beschleunigt sich erfindungsgemäß die Einstellung des Ambientelichtes, wodurch sich der Anwender des Fahrzeugs besser auf das Verkehrsgeschehen konzentrieren kann. Die Ambientelichteinheit ist für eine Montage an einer Türinnenverkleidung (z.B. in Form einer Zierleiste) eines PKWs, in den Säulen (A-/B-/C-/D-Säule) des Fahrzeugs, im Bereich des Armaturenbrettes und/oder entlang einer Mittelkonsole des Fahrzeugs vorgesehen. Das berührungsempfindliche Eingabeelement ist bevorzugt eingerichtet, eine horizontale Wischgeste und/oder eine vertikale Wischgeste und/oder eine Langdruck-Geste und/oder eine Multitouch-Geste und/oder eine Multi-Wischgeste zu erfassen und voneinander unterscheidbar zu signalisieren. Mit anderen Worten wandelt das berührungsempfindliche Eingabeelement die vorgenannten Eingaben in unterschiedliche elektrische Signale und stellt entsprechende Informationen für eine anschließende Auswertung bereit.

Das berührungsempfindliche Eingabeelement kann bevorzugt zumindest anteilig transluzent, insbesondere transparent ausgestaltet sein. Mit anderen Worten ist es eingerichtet, das Ambientelicht in den Innenraum des Fahrzeugs durchzulassen. Das berührungsempfindliche Eingabeelement ist somit bevorzugt in der Art relativ zum Leuchtmittel angeordnet, dass eine (versuchte) Berührung des Leuchtmittels durch einen Anwender stets auch mit einer Betätigung des berührungsempfindlichen Eingabeelementes einhergeht. Eine derartig räumlich nahe relative Zuordnung der beiden Elemente unterstreicht die intuitive Bedienbarkeit und ermöglicht bei einer flächigen Ausgestaltung eine im Wesentlichen stufenlose Steuerung des Leuchtmittels.

Das berührungsempfindliche Eingabeelement kann insbesondere einstückig mit einer Abdeckung des Leuchtmittels ausgestaltet sein. Mit anderen Worten stellen Oberflächenbereiche der Abdeckung das berührungsempfindliche Eingabeelement bereit. Auf diese Weise kann eine ebene Oberfläche realisiert werden, wodurch das Eindringen von Fremdkörpern, das Anhaften von Verschmutzungen und Beeinträchtigungen eines Wertigkeitseindrucks beim Anwender vermindert werden.

Unter einer Langdruck-Geste wird eine Berührung des berührungsempfindlichen Eingabeelementes für eine Dauer größer einer vordefinierten Zeitdauer (englisch "longpress") verstanden. Unter einer Multitouch-Geste wird im Rahmen der vorliegenden Erfindung eine solche Geste verstanden, bei welcher zeitgleich mehrere Punkte des berührungsempfindlichen Eingabeelementes (beispielsweise durch mehrere Fingerspitzen des Anwenders) berührt und erkannt werden. Eine solche Multitouch-Geste kann auch eine Pinch-/Spreizgeste umfassen, bei welcher zwei oder mehr Finger zueinander beziehungsweise auseinander geführt werden. Auch eine Wischgeste unter zeitgleichem Kontakt mehrerer Finger mit dem berührungsempfindlichen Eingabeelement ("Multi-Wischgeste") kann zur Erzeugung eines vorbestimmten Steuersignals verwendet werden. Die vorgenannten Eingabetypen können zur Modifikation einer Vielzahl unterschiedlicher Parameter des Ambientelichtes verwendet werden.

Das Leuchtmittel kann beispielsweise im Wesentlichen linienförmig gestaltet sein, wobei sich das berührungsempfindliche Eingabeelement bevorzugt zumindest annähernd entlang der gesamten Länge des Leuchtelementes erstreckt. Insbesondere kann das Leuchtelement ein oder mehrere Leuchtmittel ("Lichterzeuger") und insbesondere einen Diffusor oder mehrere Diffusoren zur Erzeugung eines ununterbrochenen Lichtstreifens umfassen. Im Bereich des dem Fahrzeuginnenraum zugewandten Lichtaustrittes ist erfindungsgemäß das berührungsempfindliche Eingabeelement vorgesehen, sodass im Wesentlichen entlang der gesamten Länge des Leuchtelementes eine erfindungsgemäße Eingabe zur Veränderung von Parametern des Ambientelichtes erfasst und gewandelt werden kann.

Das Leuchtelement kann beispielsweise eine RGB (rot, gelb, blau)-LED umfassen. LEDs bieten den Vorteil, dass sie eine geringe Wärmeentwicklung, eine hohe Lebensdauer, einen geringen Energieaufwand sowie ein geringes Volumen miteinander kombinieren. Zudem kann die Lichtfarbe durch die Verwendung von RGB-LEDs umfangreich verändert werden. Selbiges gilt für die Lichtintensität eines RGB-LED. Insbesondere sei im Rahmen der vorliegenden Erfindung ein Bildschirm nicht als Leuchtelement zu verstehen.

Das berührungsempfindliche Eingabeelement kann beispielsweise ein kapazitives Bauelement umfassen. Beispielsweise ist eine kapazitive Sensormatrix aufgrund der Möglichkeit einer hohen Ortsauflösung bezüglich einer vorgenommenen Eingabe zur erfindungsgemäßen Verwendung geeignet. Auf diese Weise können die oben genannten unterschiedlichen Gesten sicher und hochauflösend voneinander unterschieden werden.

Zudem wird eine Anordnung umfassend eine Ambientelichteinheit vorgeschlagen. Weiter umfasst die Anordnung eine Steuereinheit, welche eingerichtet ist, im Ansprechen auf ein Signal des berührungsempfindlichen Eingabeelementes der Ambientelichteinheit eine Lichtintensität und/oder eine Lichtfarbe und/oder eine Lichtfarbenänderungsgeschwindigkeit und/oder eine Lichtfarbenänderungscharakteristik des Ambientelichtes anzupassen. Die Lichtintensität wird üblicherweise auch als "Helligkeit" bezeichnet. Eine Lichtfarbenänderung kann einerseits für den Moment der Auswahl einer gewünschten Farbe als auch für eine automatische, insbesondere kontinuierliche, Änderung der Lichtfarbe vorgesehen sein. Die Charakteristik, mit welcher sich die Lichtfarbe ändert, kann stufenweise, kontinuierlich, hinsichtlich einer Farbreihenfolge und/oder hinsichtlich Pausenzeiten zwischen der Ausschüttung der unterschiedlichen Lichtfarben erfolgen. Auch ein kontinuierliches Pulsieren der Intensität kann durch ein vordefiniertes Signal ein- beziehungsweise ausgeschaltet werden. Die vorgenannten Parameter stellen umfangreiche Möglichkeiten zur Anpassung einer Ambientebeleuchtung eines Fahrzeuginnenraums bereit.

Bevorzugt kann die Anordnung ein Leuchtelement mit mehreren Leuchtmitteln (z. B. LEDs) umfassen, welche eingerichtet sind, um ein Ansprechen auf ein Signal der Steuereinheit zeitgleich Licht unterschiedlicher Farben an unterschiedlichen Leuchtmittelpositionen abzustrahlen. Mit anderen Worten kann an einer ersten Leuchtmittelposition ein erstes Leuchtmittel in einer ersten Farbe leuchten, während an einer zweiten Leuchtmittelposition ein zweites Leuchtmittel in einer zweiten (von der ersten Farbe unterschiedlichen) Farbe leuchtet. Je mehr unterschiedliche Farben zeitgleich an unterschiedlichen Leuchtmittelpositionen ausgeschüttet werden können, desto feiner kann eine Anwendereingabe an einer gegebenen Eingabeposition auf dem berührungsempfindlichen Eingabeelement einer dem Anwender genehmen Farbe zugeordnet werden. Im Ansprechen auf eine solche Eingabe kann die Steuereinheit eine Umschaltung sämtlicher Leuchtmittel der Ambientelichteinheit (oder der gesamten Ambientebeleuchtung im Fahrzeug) auf die gewählte Farbe veranlassen. Auf diese Weise ist eine komfortable und rasch vornehmbare Änderungsmöglichkeit für Parameter der Ambientebeleuchtung bereitgestellt.

Die Steuereinheit ist eingerichtet, im Ansprechen auf ein Signal des berührungsempfindlichen Eingabeelementes einen Bildschirm zur Anzeige eines Menüs zur Einstellung des Ambientelichtes anzusteuern. Mit anderen Worten kann nach einer erfindungsgemäß erfolgten Einstellung des Ambientelichtes auch ein im Fahrzeug angeordneter Bildschirm einen der Ambientebeleuchtung zugeordneten Bildschirminhalt anzeigen. An dieser Stelle können weitere Einstellungen vorgenommen werden. Beispielsweise können vorgenommene Einstellungen abgespeichert und später durch einen einzigen Knopfdruck abgerufen werden. Alternativ oder zusätzlich kann eine vorgenommene Einstellung auch einem Fahrzeugschlüssel zugeordnet werden oder einem bestimmten Insassen des Fahrzeugs zugeordnet werden. Sofern zu einem späteren Zeitpunkt der Fahrzeugschlüssel in Verbindung mit dem Fahrzeug verwendet wird beziehungsweise der Insasse erneut das Fahrzeug betritt, kann das zuvor abgespeicherte Ambientelicht automatisch eingestellt werden.

Der Bildschirm ist eingerichtet, einen Hinweis über die Möglichkeit einer Einstellung des Ambientelichtes mittels des berührungsempfindlichen Eingabeelementes anzuzeigen. Auf diese Weise wird ein mit der erfindungsgemäßen Ambientelichteinheit nicht vertrauter Anwender auf die erfindungsgemäße Funktion hingewiesen. Das Studium einer Bedienungsanleitung kann somit im Idealfall entfallen.

Gemäß einem dritten Aspekt der vorliegenden Erfindung wird ein Verfahren zum Einstellen eines Ambientelichtes mittels einer oben beschriebenen Anordnung vorgeschlagen, welche in Verbindung mit dem erstgenannten Erfindungsaspekt im Detail beschrieben worden ist.

Zunächst wird eine Langdruck-Eingabe auf dem berührungsempfindlichen Eingabeelement erkannt und im Ansprechen darauf ein erster Parameter des Ambientelichtes angepasst. Alternativ oder zusätzlich wird in einem weiteren Schritt eine Wischgeste auf dem berührungsempfindlichen Eingabeelement erkannt und im Ansprechen darauf ein zweiter Parameter des Ambientelichtes angepasst. Alternativ oder zusätzlich wird in einem dritten Schritt eine Multitouch-Geste (mit zwei oder mehr Fingern) auf dem berührungsempfindlichen Eingabeelement erkannt und im Ansprechen darauf ein dritter Parameter des Ambientelichtes angepasst. Alternativ oder zusätzlich wird eine Multi-Wischgeste (Wischgeste unter Kontakt mit mehr als einem Finger) auf dem berührungsempfindlichen Eingabeelement erkannt und im Ansprechen darauf ein vierter Parameter des Ambientelichtes angepasst. Auch eine einfache Tippgeste kann zur Erzeugung eines Steuersignals vorgesehen werden. Beispielsweise können unterschiedliche Funktionen mit einem jeweiligen Tipp "durchgeschaltet" werden, sodass eine nachfolgende Wischgeste o.ä. einen jeweiligen Parameter des Ambientelichtes beeinflusst.

Die erfindungsgemäß anpassbaren Parameter können beispielsweise eine Lichtintensität ("Helligkeit"), eine Lichtfarbe, eine Lichtfarbenänderungsgeschwindigkeit oder eine Lichtfarbenänderungscharakteristik sein. Die Lichtfarbenänderungscharakteristik kann beispielsweise eine Richtung sein, in welcher die verfügbaren Farben gewechselt werden. Die Lichtfarbenänderungscharakteristik kann jedoch auch weiterreichende Parameter der Lichtfarbenänderung umfassen. Als Beispiele seien ein Puls-Pause-Verhältnis, eine Schwellcharakteristik ("Dimmverhalten"), eine stufenweise oder eine kontinuierliche Veränderung der Lichtfarbe verstanden.

Weiter wird ein Fahrzeug vorgeschlagen, welches beispielsweise als PKW, als Transporter, als LKW, als Wasser- und/oder Luftfahrzeug ausgestaltet ist. Das Fahrzeug umfasst erfindungsgemäß eine Anordnung zur Erzeugung von Ambientelicht, wie sie in Verbindung mit dem erstgenannten Erfindungsaspekt im Detail beschrieben worden ist. Die Merkmale, Merkmalskombinationen und die sich aus diesen ergebenden Vorteile entsprechen den in Verbindung mit dem erstgenannten Aspekt der vorliegenden Erfindung Ausgeführten derart ersichtlich, dass zur Vermeidung von Wiederholungen auf die obigen Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht eines Ausführungsbeispiels eines erfindungsgemäßen Fahrzeugs umfassend ein Ausführungsbeispiel einer erfindungsgemäßen Ambientelichteinheit in einem Ausführungsbeispiel einer erfindungsgemäßen Anordnung;
- Figur 2: eine perspektivische Ansicht eines Innenraums eines Fahrzeugs;
- Figur 3: ein Screenshot ("eine Bildschirmansicht") veranschaulichend ein Bedienelement zur Anpassung einer Ambientebeleuchtung gemäß dem Stand der Technik;
- Figur 4: ein Screenshot eines Menüs zur Einstellung einer Ambientebeleuchtung gemäß dem Stand der Technik;
- Figur 5: eine Skizze eines Ausführungsbeispiels eines erfindungsgemäßen Verfahrens zur Anpassung eines Ambientelichtes;
- Figuren 6, 7, 8: Bedienschritte eines Ausführungsbeispieles eines erfindungsgemäßen Verfahrens zur Anpassung einer Farbe eines Ambientelichtes;
- Figuren 9, 10: ein Screenshot zur Anpassung eines Ambientelichtes gemäß einem Ausführungsbeispiel der vorliegenden Erfindung; und
- Figur 11: ein Flussdiagramm veranschaulichend Schritte eines Ausführungsbeispieles eines erfindungsgemäßen Verfahrens.

### Ausführungsformen der Erfindung

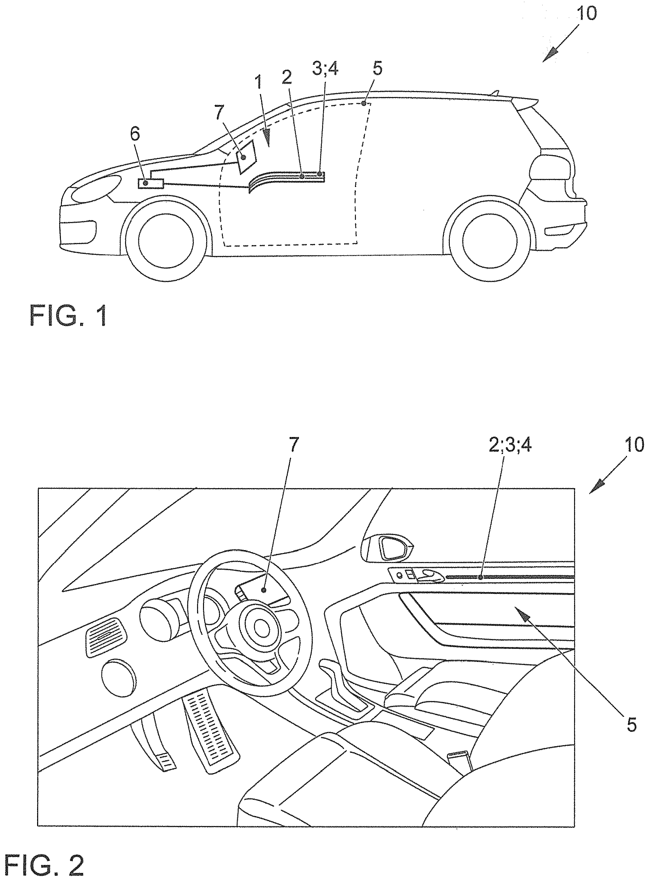

Figur 1 zeigt Komponenten eines PKW als Fahrzeug 10, welcher eine Anordnung mit einer Ambientelichteinheit 1 aufweist. In einer Türinnenverkleidung 5 ist ein leistenförmiges Leuchtelement 2 vorgesehen, welches durch ein als Abdeckung 4 ausgestaltetes berührungsempfindliches Eingabeelement 3 abgedeckt ist. Sowohl das Leuchtelement 2 als auch das berührungsempfindliche Eingabeelement 3 sind an ein elektronisches Steuergerät 6 als Steuereinheit informationstechnisch angeschlossen. Das elektronische Steuergerät 6 ist überdies an einen berührungsempfindlichen Bildschirm 7 angeschlossen, über welchen zusätzliche Informationen über das Ambientelicht angezeigt und Steuerbefehle mittels einer berührungsempfindlichen Oberfläche entgegengenommen werden können.

Figur 2 zeigt eine perspektivische Ansicht eines Innenraums eines Fahrzeug 10, welcher über einen in das Armaturenbrett eingelassenen Bildschirm 7 verfügt. In die Türinnenverkleidung 5 der Beifahrerseite ist ein in Höhe eines Türinnengriffs im Wesentlichen horizontal verlaufendes Leuchtelement 2 mit einem dieses abdeckenden, als Abdeckung 4 ausgeführten, berührungsempfindlichen Eingabeelements angeordnet.

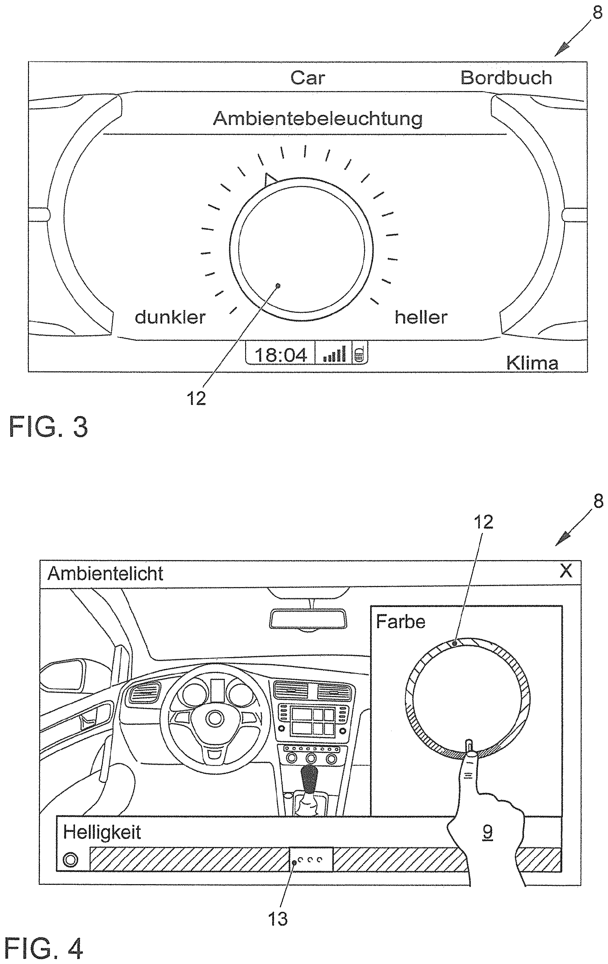

Figur 3 zeigt einen Screenshot 8 einer Mensch-Maschine-Schnittstelle, welche einen Drehsteller 12 zur Anpassung einer Lichtintensität einer Ambientebeleuchtung umfasst. Empfängt die Mensch-Maschine-Schnittstelle eine Eingabe, mittels welcher der Drehknopf im Uhrzeigersinn gedreht wird, wird die Intensität der Ambientebeleuchtung erhöht, im umgekehrten Fall verringert.

Figur 4 zeigt einen Screenshot 8 einer alternativen Bildschirmansicht zur Anpassung eines Ambientelichtes. Über einen Drehsteller 12 kann eine Eingabe mit der Hand 9 eines Anwenders eine Farbe wahlfrei festgelegt werden. Entsprechendes gilt für die Helligkeit des Ambientelichtes und einen horizontalen Schieberegler 13.

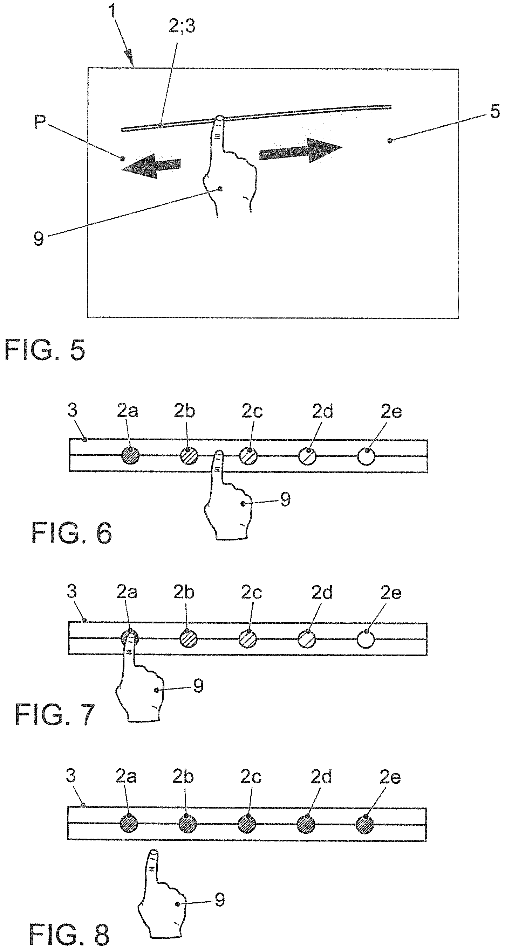

Figur 5 zeigt eine Türinnenverkleidung 5 eines Fahrzeugs 10, in welche eine Ambientelichteinheit umfassend ein linienförmiges Leuchtelement 2 und ein ebenfalls linienförmig ausgeführtes berührungsempfindliches Eingabeelement eingelassen ist. Mit einem einzelnen Finger der Hand 9 führt eine Wischgeste entlang des Doppelpfeils P zu einer Veränderung der Lichtintensität des durch das Leuchtelement 2 ausgeführten Lichtes. Im Unterschied zum Stand der Technik ist kein an zentraler Position vorgesehenes Menü einer Mensch-Maschine-Schnittstelle oder ein hardwaretechnisch realisierter Schalter/Taster zu bedienen. Identifiziert der Anwender einen Verbesserungsbedarf hinsichtlich der Ambientebeleuchtung, kann er den erforderlichen Bedienschritt ohne Umwege direkt am betreffenden Element vornehmen.

Die Figuren 6 bis 8 zeigen Schritte eines erfindungsgemäßen Verfahrens zur Anpassung einer Lichtfarbe. In Figur 6 führt der Anwender mit seiner Hand 9 eine Langdruck-Geste an einer beliebigen Stelle auf dem berührungsempfindlichen Eingabeelement 3 aus. Im Ansprechen darauf wird nach Ablauf der für die Langdruck-Geste vordefinierten Zeitdauer eine Vielzahl Leuchtmittel 2a, 2b, 2c, 2d, 2e an unterschiedlichen Leuchtmittelpositionen zur zeitgleichen Ausschüttung von Licht unterschiedlicher Farbe angeregt.

In Figur 7 wählt der Anwender mit seiner Hand 9 die Leuchtmittelposition des berührungsempfindlichen Eingabeelementes 3 aus, an welcher sich das rot leuchtende Leuchtmittel 2a befindet.

In Figur 8 hat der Anwender seine Hand 9 von dem berührungsempfindlichen Eingabeelement 3 abgehoben. Im Ansprechen darauf leuchten alle Leuchtmittel 2a, 2b, 2c, 2d, 2e wie gewünscht rot. Auch weitere, im Fahrzeug 10 befindliche, Ambienteleuchtmittel erhalten dieselbe Farbeinstellung, sofern der Anwender nicht eine gegenteilige Einstellung in einem Konfigurationsmenü vorgenommen oder zeitgleich eine weitere Ambientelichteinheit mit einer anderen Farbeinstellung versehen hat.

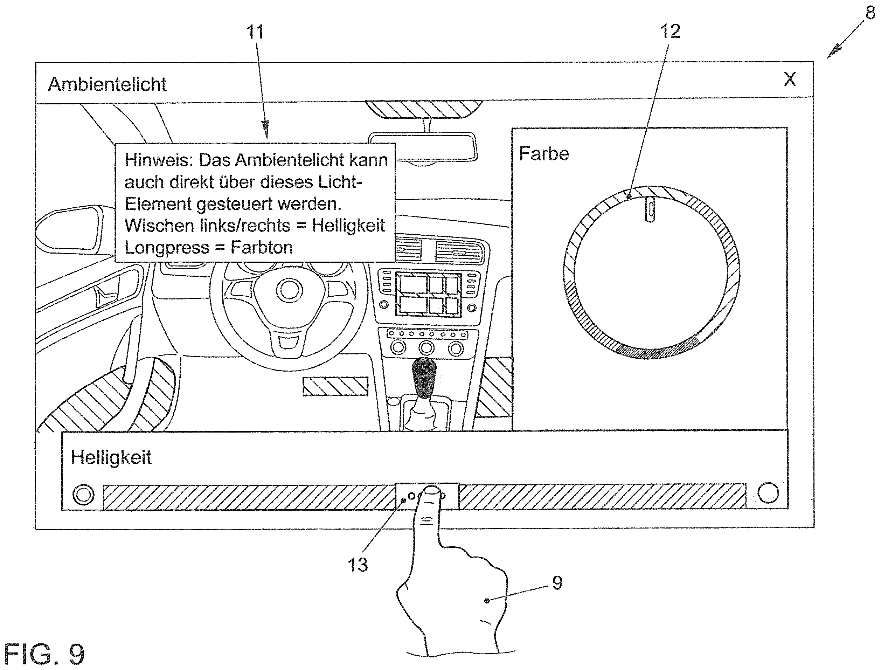

Figur 9 zeigt einen Screenshot 8, welcher mit dem in Verbindung mit Figur 4 gezeigten Konfigurationsmenü korrespondiert. Erfindungsgemäß wird zusätzlich ein Hinweis 11 angezeigt, der den Anwender darüber informiert, mittels welcher Gesten auf dem berührungsempfindlichen Eingabeelement an der erfindungsgemäßen Ambientelichteinheit welcher Parameter angepasst werden kann. Der Hinweis 11 sowie der gesamte Bildschirminhalt des Screenshots 8 kann beispielsweise auch im Ansprechen auf eine am berührungsempfindlichen Eingabeelement vorgenommenen Eingabe auf dem Bildschirm angezeigt werden. Erfindungsgemäß ist also eine direkte Kopplung zwischen einer mittels des berührungsempfindlichen Eingabeelementes gewählten Farbe und einer Stellung des Drehstellers 12 gegeben. Entsprechend wirkt sich eine Betätigung des Drehstellers 12 unmittelbar auf die vom Leuchtelement ausgeschüttete Lichtfarbe aus. Entsprechendes gilt für den Schieberegler 13 und die Helligkeit.

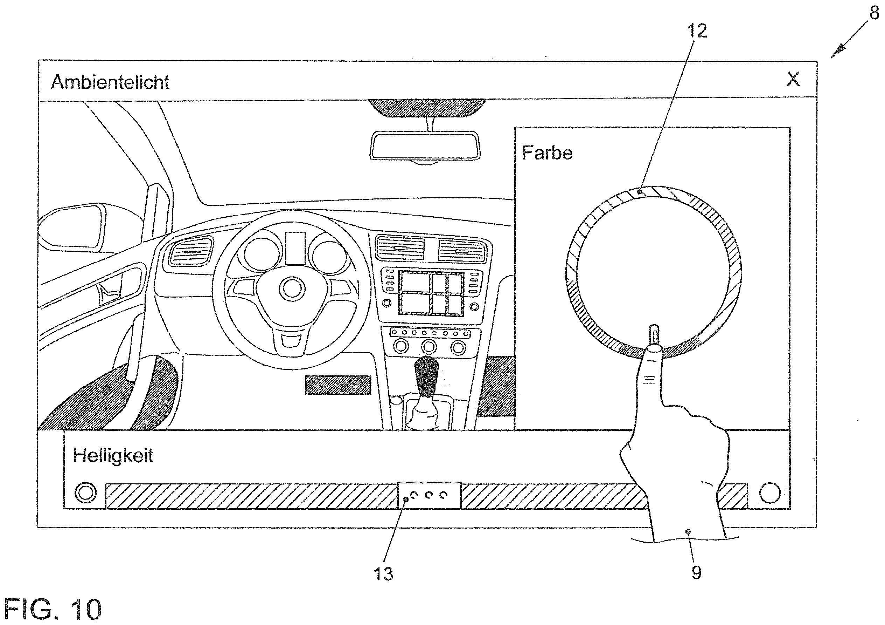

Figur 10 zeigt einen Bedienschritt des in Figur 9 dargestellten Screenshots 8 durch die Hand 9 eines Anwenders. Im Ansprechen auf die Berührung durch die Hand 9 des Anwenders ist der Hinweis 11 verschwunden. Über den Drehsteller 12 passt der Anwender die Farbe des Ambientelichts an. Über eine anschließende Betätigung der Schaltfläche 14 wird der in Screenshot 8 veranschaulichte Bildschirm geschlossen und zur bisherigen Bildschirmansicht (z. B. einem Homescreen) zurückgekehrt.

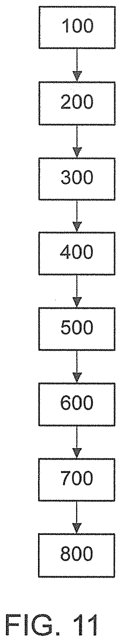

Figur 11 zeigt Schritte eines Ausführungsbeispiels eines erfindungsgemäßen Verfahrens zum Einstellen eines Ambientelichtes mittels einer Ambientelichteinheit gemäß der vorliegenden Erfindung. In Schritt 100 wird eine Langdruck-Eingabe auf einem berührungsempfindlichen Eingabeelement erkannt und im Ansprechen darauf in Schritt 200 eine Lichtintensität als erster Parameter des Ambientelichtes angepasst. In Schritt 300 wird anschließend eine Wischgeste auf dem berührungsempfindlichen Eingabeelement erkannt und im Ansprechen darauf in Schritt 400 eine Lichtfarbe als zweiter Parameter des Ambientelichtes angepasst. In Schritt 500 wird eine Multitouch-Geste, bei welcher der Anwender zeitgleich mit zwei Fingern auf das berührungsempfindliche Eingabeelement tippt, erkannt und im Ansprechen darauf in Schritt 600 eine Lichtfarbenänderungsgeschwindigkeit als dritter Parameter des Ambientelichtes angepasst. In Schritt 700 wird eine Multi-Wischgeste, bei welcher der Anwender mit mehreren Fingern eine Wischgeste auf dem berührungsempfindlichen Eingabeelement ausführt, erkannt und im Ansprechen darauf in Schritt 800 eine Lichtfarbenänderungscharakteristik als vierter Parameter des Ambientelichts angepasst. Die vorgenannten Schritte können ohne eine Interaktion mit einer mehrere Hierarchien umfassenden Menüstruktur einer Mensch-Maschine-Schnittstelle mit einer grafischen Anwenderschnittstelle vorgenommen werden. Im Ergebnis beschleunigt die vorliegende Erfindung die Anpassung von Parametern eines Ambientelichtes.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Ambientelichteinheit
- 2: Leuchtelement
- 2a, 2b, 2c, 2d, 2e: Leuchtmittel
- 3: berührungsempfindliches Eingabeelement
- 4: Abdeckung
- 5: Türinnenverkleidung
- 6: elektronisches Steuergerät
- 7: Bildschirm
- 8: Screenshot
- 9: Hand des Anwenders
- 10: Fahrzeug
- 11: Hinweis
- 12: Drehsteller
- 13: Schieberegler
- 14: Schaltfläche zum Schließen
- 100 bis 800: Verfahrensschritte
- P: Pfeil

## Patentansprüche

1. Anordnung zur Erzeugung von Ambientelicht für ein Fahrzeug (10), umfassend
- eine Ambientelichteinheit (1) mit
- einem Leuchtelement (2) zur Erzeugung von Ambientelicht, und
- einem berührungsempfindlichen Eingabeelement (3) zur Modifikation einer Lichtstärke und/oder eines Farbtons des Ambientelichtes, wobei
- das berührungsempfindliche Eingabeelement (3) in unmittelbarer Nähe zum Leuchtelement (2) angeordnet ist, und
- eine Steuereinheit (6), wobei
- die Steuereinheit (6) eingerichtet ist, im Ansprechen auf ein Signal des berührungsempfindlichen Eingabeelementes (3)
- einen Bildschirm (7) zur Anzeige eines Menüs zur Einstellung des Ambientelichtes anzusteuern und
- eine Lichtintensität, und/oder
- eine Lichtfarbe und/oder
- eine Lichtfarbenänderungsgeschwindigkeit und/oder
- eine Lichtfarbenänderungscharakteristik des Ambientelichtes anzupassen,
**dadurch gekennzeichnet, dass**
der Bildschirm (7) eingerichtet ist, einen Hinweis (11) über die Möglichkeit einer Einstellung des Ambientelichtes mittels des berührungsempfindlichen Eingabeelementes (3) anzuzeigen.

2. Anordnung nach Anspruch 1, wobei das Leuchtelement (2) mehrere Leuchtmittel (2a, 2b, 2c, 2d) aufweist, welche eingerichtet sind, im Ansprechen auf ein Signal der Steuereinheit (6) zeitgleich Licht unterschiedlicher Farben an unterschiedlichen Leuchtmittelpositionen abzustrahlen, wobei die Steuereinheit (6) eingerichtet ist, eine Eingabeposition einer Anwendereingabe auf dem berührungsempfindlichen Eingabeelement (3) einer Farbe zuzuordnen.

3. Verfahren zum Einstellen eines Ambientelichtes mittels einer Anordnung nach einem der Ansprüche 1 oder 2, umfassend die Schritte:
- Erkennen (100) einer Langdruck-Eingabe auf dem berührungsempfindlichen Eingabeelement (3) und im Ansprechen darauf
- Anpassen (200) eines ersten Parameters des Ambientelichtes, und/oder
- Erkennen (300) einer Wischgeste auf dem berührungsempfindlichen Eingabeelement (3) und im Ansprechen darauf
- Anpassen (400) eines zweiten Parameters des Ambientelichtes, und/oder
- Erkennen (500) einer Multitouch-Geste auf dem berührungsempfindlichen Eingabeelement (3) und im Ansprechen darauf
- Anpassen (600) eines dritten Parameters des Ambientelichtes, und/oder
- Erkennen (700) einer Multi-Wischgeste auf dem berührungsempfindlichen Eingabeelement (3) und im Ansprechen darauf
- Anpassen (800) eines vierten Parameters des Ambientelichtes.

4. Verfahren nach Anspruch 3, wobei der erste Parameter und/oder der zweite Parameter und/oder der dritte Parameter und/oder der vierte Parameter aus der folgenden Liste ausgewählt sind:
- Lichtintensität,
- Lichtfarbe,
- Lichtfarbenänderungsgeschwindigkeit,
- Lichtfarbenänderungscharakteristik.

5. Fahrzeug (10) umfassend mindestens eine Anordnung nach einem der Ansprüche 1 oder 2.

## Claims

1. Arrangement for creating ambient lighting for a vehicle (10), comprising
- an ambient lighting unit (1) having
- a light element (2) for creating ambient lighting, and
- a touch-sensitive input element (3) for modifying a light intensity and/or a hue of the ambient lighting, wherein
- the touch-sensitive input element (3) is arranged in the immediate vicinity of the light element (2), and
- a control unit (6), wherein
- the control unit (6) is configured, in response to a signal of the touch-sensitive input element (3),
- to control a screen (7) for displaying a menu for adjusting the ambient lighting, and to adjust
- a light intensity, and/or
- a light color, and/or
- a light color change rate and/or
- a light color change characteristic of the ambient lighting, **characterized in that** the screen (7) is configured to display information (11) about the possibility of adjusting the ambient lighting by means of the touch-sensitive input element (3).

2. Arrangement according to Claim 1, wherein the light element (2) has a plurality of illuminants (2a, 2b, 2c, 2d) which are configured, in response to a signal of the control unit (6), to simultaneously emit light of different colors at different illuminant positions, wherein the control unit (6) is configured to associate an input position of a user input on the touch-sensitive input element (3) with a color.

3. Method for adjusting ambient lighting using an arrangement according to one of Claims 1 or 2, comprising the steps of:
- detecting (100) a long-pressure input on the touch-sensitive input element (3) and, in response thereto,
- adjusting (200) a first parameter of the ambient lighting, and/or
- detecting (300) a swiping gesture on the touch-sensitive input element (3) and, in response thereto,
- adjusting (400) a second parameter of the ambient lighting, and/or
- detecting (500) a multi-touch gesture on the touch-sensitive input element (3) and, in response thereto,
- adjusting (600) a third parameter of the ambient lighting, and/or
- detecting (700) a multi-swipe gesture on the touch-sensitive input element (3) and, in response thereto,
- adjusting (800) a fourth parameter of the ambient lighting.

4. Method according to Claim 3, wherein the first parameter and/or the second parameter and/or the third parameter and/or the fourth parameter are selected from the following list:
- light intensity,
- light color,
- light color change rate,
- light color change characteristic.

5. Vehicle (10) comprising at least one arrangement according to one of Claims 1 or 2.

## Revendications

1. Dispositif pour la génération d'éclairage d'ambiance pour un véhicule (10), comprenant
- une unité d'éclairage d'ambiance (1) comprenant
- un élément lumineux (2) pour la génération de l'éclairage d'ambiance, et
- un élément d'entrée (3) sensible au toucher pour la modification d'une intensité lumineuse et/ou d'une teinte de l'éclairage d'ambiance,
- l'élément d'entrée (3) sensible au toucher étant disposé à proximité immédiate de l'élément lumineux (2), et
- une unité de commande (6),
- l'unité de commande (6) étant conçue pour, en réponse à un signal de l'élément d'entrée (3) sensible au toucher,
- commander un écran (7) pour l'affichage d'un menu pour le réglage de l'éclairage d'ambiance et
- adapter une intensité lumineuse et/ou
- une couleur lumineuse et/ou
- une vitesse de changement de couleur lumineuse et/ou
- une caractéristique de changement de couleur lumineuse d'éclairage d'ambiance, **caractérisé en ce que** l'écran (7) est conçu pour afficher une indication (11) sur la possibilité d'un réglage d'éclairage d'ambiance au moyen de l'élément d'entrée (3) sensible au toucher.

2. Dispositif selon la revendication 1, dans lequel l'élément lumineux (2) présente plusieurs sources lumineuses (2a, 2b, 2c, 2d), lesquelles sont conçues pour, en réponse à un signal de l'unité de commande (6), émettre simultanément de la lumière de différentes couleurs dans différentes positions de sources lumineuses l'unité de commande (6) étant conçue pour associer une couleur à une position d'entrée d'une entrée d'utilisateur sur l'élément d'entrée (3) sensible au toucher.

3. Procédé pour le réglage d'un éclairage d'ambiance au moyen d'un dispositif selon l'une quelconque des revendications 1 ou 2, comprenant les étapes :
- reconnaissance (100) d'une entrée par pression prolongée sur l'élément d'entrée (3) sensible au toucher et en réponse à celle-ci
- adaptation (200) d'un premier paramètre de l'éclairage d'ambiance, et/ou
- reconnaissance (300) d'un geste de balayage sur l'élément d'entrée (3) sensible au toucher et en réponse à celui-ci
- adaptation (400) d'un deuxième paramètre de l'éclairage d'ambiance, et/ou
- reconnaissance (500) d'un geste multitouch sur l'élément d'entrée (3) sensible au toucher et en réponse à celui-ci
- adaptation (600) d'un troisième paramètre de l'éclairage d'ambiance, et/ou
- reconnaissance (700) d'un geste de balayage multiple sur l'élément d'entrée (3) sensible au toucher et en réponse à celui-ci
- adaptation (800) d'un quatrième paramètre de l'éclairage d'ambiance.

4. Procédé selon la revendication 3, dans lequel le premier paramètre et/ou le deuxième paramètre et/ou le troisième paramètre et/ou le quatrième paramètre sont choisis dans la liste suivante :
- intensité lumineuse,
- couleur lumineuse,
- vitesse de changement de couleur lumineuse,
- caractéristique de changement de couleur lumineuse.

5. Véhicule (10) comprenant au moins un dispositif selon l'une quelconque des revendications 1 ou 2.
